# EUROPÄISCHE PATENTSCHRIFT

(11) **EP 1 570 933 B1**
(45) Veröffentlichungstag und Bekanntmachung des Hinweises auf die Patenterteilung: **31.03.2010**
(21) Anmeldenummer: 05003751.4
(22) Anmeldetag: 22.02.2005
(51) Int. Cl.: B23B 31/28, B23B 31/26

(54) **Vorrichtung mit einer Löseeinheit zum Betätigen einer Spannvorrichtung für Werkzeuge**
Apparatus with a releasing unit for the actuation of a clamping device for tools
Appareil avec une unité de désengagement pour la commande d'un dispositif de serrage pour outils

(30) Priorität: 03.03.2004 DE 102004011738
(43) Veröffentlichungstag der Anmeldung: 07.09.2005
(73) Patentinhaber: Michael Weinig Aktiengesellschaft, D-97941 Tauberbischofsheim (DE)
(72) Erfinder: Martin, Bernd, 97941 Tauberbischofsheim (DE); Rapp, Walter, 97953 Königheim-Gissigheim (DE); Wagner, Ralf, 74736 Hardheim (DE); Dawidziak, Albrecht, 97950 Grossrinderfeld (DE); Englert, Heinrich, 97922 Lauda-Königshfen (DE); Klein, Hubert, 97977 Wertheim-Nassig (DE)
(74) Vertreter: Jackisch-Kohl, Anna-Katharina

(56) Entgegenhaltungen:
- EP-A- 0 193 876
- EP-A- 1 114 685
- EP-A- 1 262 264
- DE-A1- 10 101 093
- DE-A1- 10 101 095
- US-A- 4 750 850

## Beschreibung

Die Erfindung betrifft eine Vorrichtung mit einer Löseeinheit zum Betätigen einer Spannvorrichtung für Werkzeuge nach dem Oberbegriff des Anspruches 1. Eine solche Vorrichtung ist aus der US-A-4,750,850 bekannt.

Mit Spannvorrichtungen werden Werkzeuge in einer Schnittstelle einer Werkzeugspindel eingespannt. Die Werkzeugspindel hat in der Regel eine HSK-Aufnahme für die Werkzeuge, die über eine Spannzange in die Spindel eingezogen und mit einer hohen axialen Einzugskraft gespannt werden. Durch die axiale Bewegung der Spannstange werden Spannzangensegmente mittels eines auf der Spannstange sitzenden Konusstückes nach außen gedrückt. Die Spannzangenelemente hintergreifen eine Spannfläche am Werkzeug, das durch die Spannstange in die Spindel eingezogen und gespannt wird. Die axiale Bewegung der Spannstange wird in Spannrichtung von einem Federpaket, zum Beispiel von einem Tellerfederpaket, mechanisch und damit sehr sicher und zuverlässig durchgeführt.

Um das Werkzeug zu lösen, muß die Spannstange gegen die Federkraft nach vorn verstellt werden. Hierbei werden die Spannzangensegmente so freigegeben, daß sie nach innen schwenken können. Das Werkzeug wird dann auf dem letzten Rest des Verfahrweges durch die Spannstange aus der Werkzeugaufnahme ausgestoßen.

Zum axialen Verschieben der Spannstange für die Freigabe des Werkzeuges ist die Löseeinheit vorgesehen, die durch eine hydraulisch betätigbare Löseeinheit nach Art eines Hydraulikzylinders ausgebildet ist. Um beim Lösen auf die Spindellagerung keine bzw. nur eine geringe Kraft auszuüben, ist ein Teil der Löseeinheit in einer Aufnahme axial verschieblich angeordnet und stützt sich mit einem Kupplungsring an einer in der Werkzeugspindel sitzenden Kupplungsschraube axial ab. Dadurch erfolgt der Kraftfluß beim Lösen des Werkzeuges nicht über die Lager, sondern über diese Abstützung.

Es ist auch bekannt, ähnliche Löseeinheiten pneumatisch zu betätigen.

Die hydraulische Lösung ist aufgrund des Bedarfs einer Hydraulikeinheit mit Pumpe, Ölbehälter, Ventilblock und der notwendigen Verrohrung aufwendig und teuer. Außerdem können Leckagen zu Funktionsstörungen führen. Wird die Werkzeugspindel durch Riemen angetrieben, müssen bei einem Riemenwechsel die Hydraulikleitungen getrennt werden, was selbst beim Einsatz hydraulischer Schnellkupplungen schwierig ist und zum Teil zu Verschmutzungen durch Öl führt.

Die pneumatische Lösung arbeitet zwar nicht mit dem Medium Öl, hat aber ansonsten die gleichen Nachteile wie die hydraulische Lösung. Hinzu kommt, daß die pneumatisch arbeitende Löseeinheit aufgrund der relativ niedrigen Drücke bei den hohen notwendigen Kräften entweder sehr groß baut oder teure Sonderlösungen, wie Tandemzylinder oder Druckübersetzer, notwendig sind.

Der Erfindung liegt die Aufgabe zugrunde, die gattungsgemäße Vorrichtung so auszubilden, daß sie einfach, preiswert und kompakt ausgebildet ist.

Diese Aufgabe wird bei der gattungsgemäßen Löseeinheit erfindungsgemäß mit den kennzeichnenden Merkmalen des Anspruches 1 gelöst.

Bei der erfindungsgemäßen Löseeinheit wird unter anderem der Antrieb durch einen Elektromotor gebildet, der einfach, preiswert und kompakt gebaut werden kann und lediglich eine elektrische Zuleitung für den Betrieb benötigt. Der Aufwand für Hydraulikaggregate und für eine Verrohrung entfällt. Die erfindungsgemäße Löseeinheit wird bevorzugt in Kehlmaschinen eingesetzt.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in perspektivischer Darstellung eine erfindungsgemäße Löseeinheit, die sich zwischen einem Motor und einer Werkzeugspindel mit Werkzeugspanneinrichtung befindet,
- Fig. 2: in perspektivischer Darstellung die erfindungsgemäße Löseeinheit mit Antrieb,
- Fig. 3: in einer Darstellung entsprechend Fig. 2 die erfindungsgemäße Löseeinheit, deren Antrieb rechtwinklig zur Löseeinheit angeordnet ist,

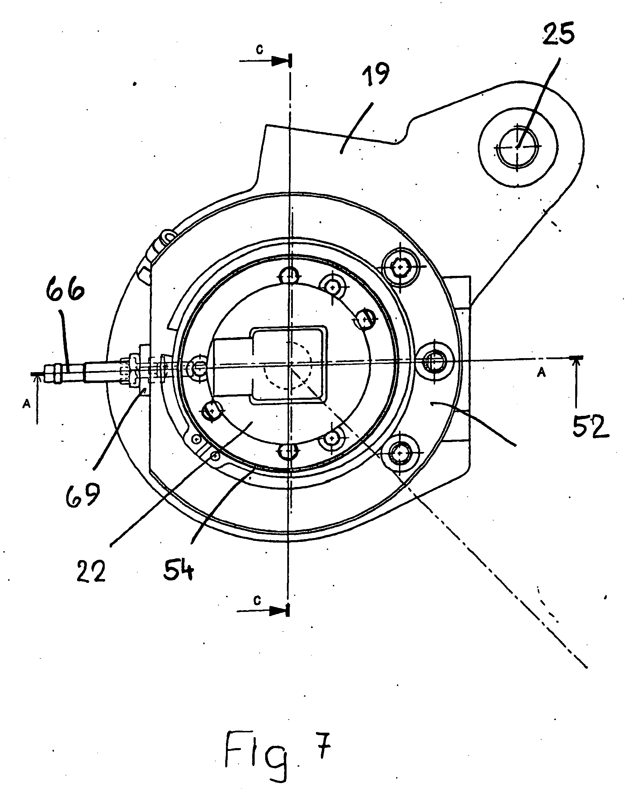

- Fig. 4: in einem Schnitt längs der Linie A-A in Fig. 7 die erfindungsgemäße Löseeinheit in ihrer Grundstellung,
- Fig. 5: in einem Schnitt längs der Linie C-C in Fig. 7 die erfindungsgemäße Löseeinheit in ihrer Grundstellung,
- Fig. 6: in einem Schnitt längs der Linie A-A in Fig. 7 die erfindungsgemäße Löseeinheit in Lösestellung,
- Fig. 7: eine Stirnansicht der erfindungsgemäßen Löseeinheit,
- Fig. 8: einen Schnitt längs der Linie B-B in Fig. 4,
- Fig. 9: im Axialschnitt die Spanneinrichtung gemäß Fig. 1,
- Fig. 10: einen Längsschnitt durch die erfindungsgemäße Löseeinheit gemäß Fig. 3,
- Fig. 11: in schematischer Darstellung eine Schaltung des Antriebes der erfindungsgemäßen Löseeinheit,
- Fig. 12: ein Ersatzschaltbild des Motors gemäß Fig. 11,
- Fig. 13: in schematischer Darstellung eine Steuerung der erfindungsgemäßen Löseeinheit.

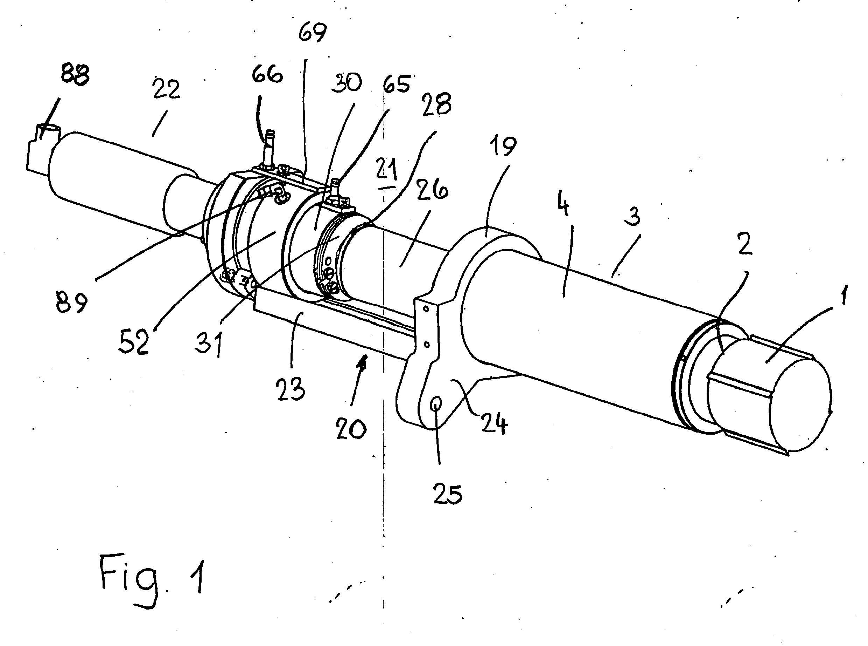

Mit der im folgenden beschriebenen stationären motorischen Löseeinheit lassen sich Werkzeuge 1 lösen, die in eine Schnittstelle 2 einer Werkzeugspindel 3 in bekannter Weise eingespannt sind. Die Werkzeugspindel 3 hat eine Spindelhülse 4 (Fig. 1), in der eine Spindelwelle 5 drehbar gelagert ist. In der Spindelwelle 5 ist in bekannter Weise eine Spannstange 6 untergebracht, die über einen Teil ihrer Länge in bekannter Weise von einem Federpaket 7 umgeben ist. Das Federpaket 7 besteht vorteilhaft aus Tellerfedern. Das Federpaket stützt sich an einem Ende über eine Führungsscheibe 8 an einer radial nach innen ragenden Schulter 9 in der Innenwand der Spindelwelle 5 ab. Am gegenüberliegenden Ende stützt sich das Federpaket 7 über eine Scheibe 10 an der Stirnseite eines Druckstückes 11 ab, das als Hülse ausgebildet ist und durch eine Kupplungsschraube 12 ragt, die in das von der Schnittstelle 2 der Werkzeugspindel 3 abgewandte Ende der Spindelwelle 5 geschraubt ist. Das über die Kupplungsschraube 12 nach außen ragende Ende des Druckstückes 11 hat einen radial nach außen gerichteten Flansch 13. Auf ihn wirkt die Löseeinheit, wenn das in die Schnittstelle 2 eingespannte Werkzeug 1 gelöst werden soll.

Die Schnittstelle 2 ist vorteilhaft als HSK-Schnittstelle ausgebildet und hat eine konusförmige Werkzeugaufnahme 14, in die das Werkzeug 1 mit einem entsprechenden kegelförmigen Schaft 15 eingreift.

Im Bereich der Schnittstelle 2 sind in der Spindelwelle 5 in bekannter Weise Spannzangen 16 gelagert, die den Werkzeugschaft 15 in der Spannstellung hintergreifen und das Werkzeug 1 in die Werkzeugaufnahme 14 ziehen und spannen. Die Spannkraft wird durch das Federpaket 7 aufgebracht. Das Werkzeug 1 wird so weit in die Spindelwelle 5 gezogen, bis es an einer ebenen Stirnfläche 17 der Spindelwelle 5 mit großer Kraft anliegt.

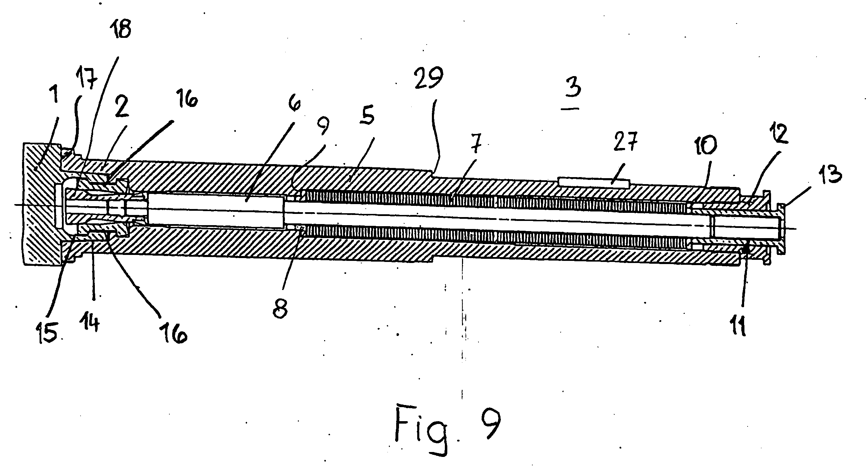

Die Spannzangen 16 werden durch ein Konusstück 18 in die in Fig. 9 dargestellte Spannstellung geschwenkt. Das Konusstück 18 sitzt fest auf der Spannstange 6. Vorzugsweise ist das Konusstück 18 auf die Spannstange 6 geschraubt. Wird die Spannstange 6 unter der Kraft des Federpaketes 7 in Fig. 9 nach rechts in der Spindelwelle 5 verschoben, spreizt es die Spannstangen 16 radial nach außen, die den Werkzeugschaft 15 hintergreifen. Wird die Spannstange 6 in noch zu beschreibender Weise durch die Löseeinheit gegen die Kraft des Federpaketes 7 in Fig. 9 nach links verschoben, gibt das Konusstück 18 so viel Raum frei, daß die Spannzangen 16 nach innen schwenken und den Werkzeugschaft 15 freigeben können. Das Konusstück 18 stößt am Ende der Verschiebebewegung das Werkzeug 1 aus der Spindelwelle 5 aus, das mit seinem Schaft 15 selbsthemmend in der Konusaufnahme 14 der Schnittstelle 2 sitzt.

An der Spindelhülse 4 ist ein Halter 19 (Fig. 1) befestigt, der Teil einer Haltevorrichtung 20 ist. Mit ihr wird eine Löseeinheit 21 gehalten, mit der in noch zu beschreibender Weise die Spannung der Werkzeuge 1 gelöst werden kann. Die Werkzeugspindel 3 und die Löseeinheit 21 liegen axial hintereinander (Fig. 1) sowie koaxial zueinander. An die von der Werkzeugspindel 3 abgewandte Seite der Löseeinheit 21 ist ein Antrieb 22 für die Löseeinheit 21 angeschlossen.

Die Haltevorrichtung 20 hat eine Auflage 23, auf der die Löseeinheit 21 aufliegend befestigt ist und die senkrecht vom Halter 19 absteht. Der Halter 19 hat ein radial abstehendes Auge 24 mit einer Gewindebohrung 25, durch die eine (nicht dargestellte) Axialverstellspindel ragt, mit der die Einheit aus Werkzeugspindel 3, Haltevorrichtung 20 und Löseeinheit 21 an einem (nicht dargestellten) Träger axial verstellt werden kann.

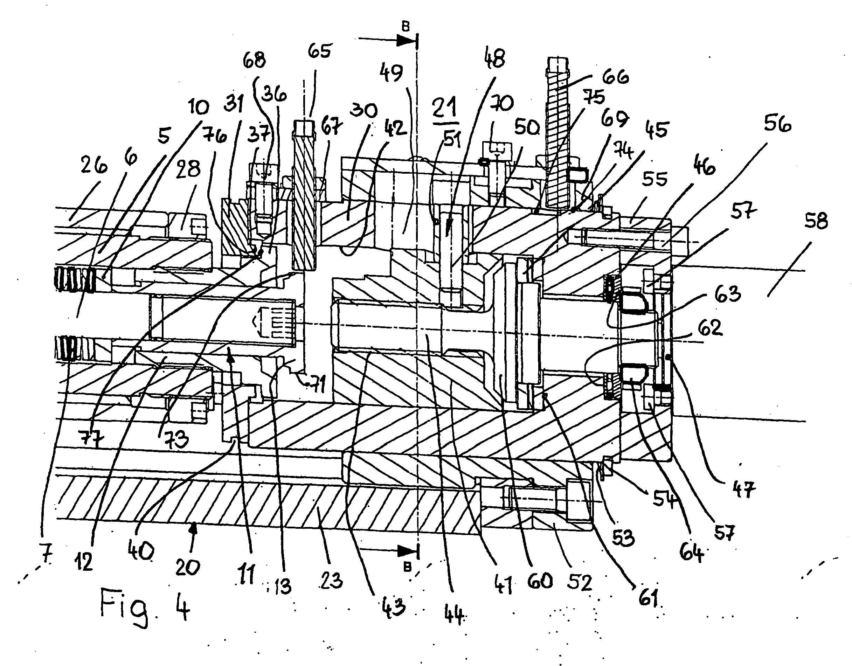

Die Spindelhülse 4 umgibt die Spindelwelle 5 an ihrem vorderen Bereich. In diesem Bereich hat die Spindelwelle 5 größere Wandstärke als im daran anschließenden Bereich (Fig. 9), auf dem drehfest eine Riemenscheibe 26 (Fig. 1) sitzt. Zur drehfesten Verbindung mit der Riemenscheibe 26 ist der in der Wandstärke dünnere Teil der Spindelwelle 5 mit wenigstens einem Formschlußelement 27 (Fig. 9) versehen, das die drehfeste Verbindung zur Riemenscheibe 26 herstellt. Mit einer Riemenscheibenmutter 28 ist die Riemenscheibe 26 axial auf der Spindelwelle 5 gesichert (Fig. 4). Die Riemenscheibenmutter 28 wird auf das der Löseeinheit 21 zugewandte Ende der Spindelwelle 5 geschraubt. Mit ihrem anderen Ende liegt die Riemenscheibe 26 unter Zwischenlage von (nicht dargestellten) Lagern an einem radial nach außen gerichteten Bund 29 (Fig. 9) an, der am Übergang vom dünneren in den dickeren Wandbereich der Spindelwelle 5 vorgesehen ist.

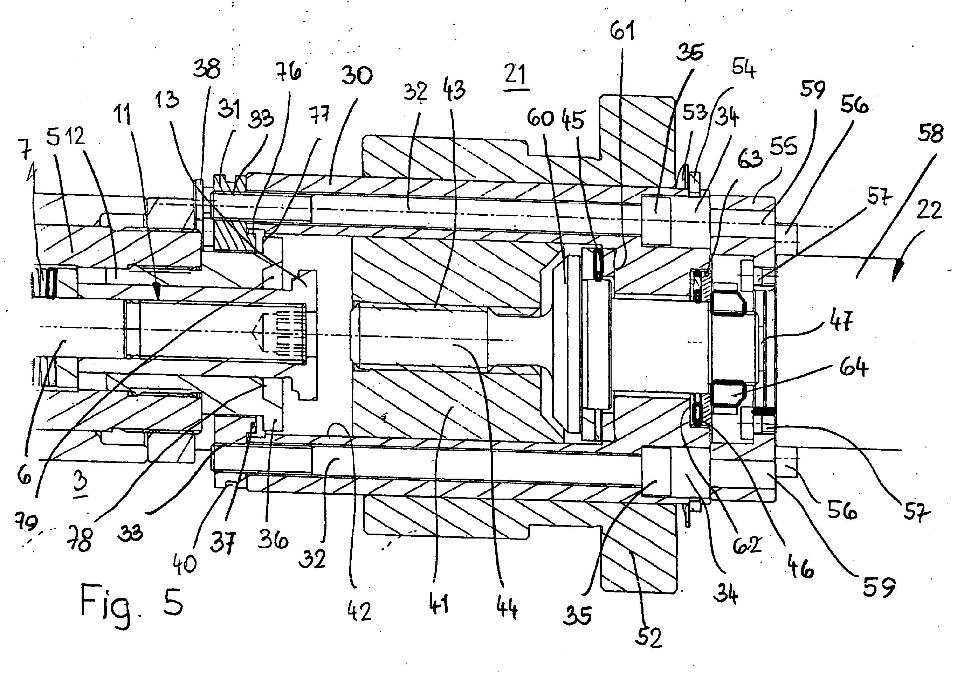

Wie die Fig. 4 und 5 zeigen, ragen die Kupplungsschraube 12 und das Druckstück 11 axial über die Spindelwelle 5 in die Löseeinheit 21. Das Druckstück 11 ist gegenüber der Kupplungsschraube 12 so weit in Richtung auf die Löseeinheit 21 verschoben, daß der Flansch 13 des Druckstückes 11 in der Grundstellung (Fig. 4 und 5) Abstand von der Kupplungsschraube 12 hat.

Die Löseeinheit 21 wird so auf der Haltevorrichtung 20 montiert, daß die Kupplungsschraube 12 und das Druckstück 11 in ein Gehäuse 30 der Löseeinheit 21 ragen. An der der Werkzeugspindel 3 zugewandten Stirnseite des Gehäuses 30 liegt ein Kupplungsring 31 an, der mit Befestigungsschrauben 32 (Fig. 5) an der Gehäusestirnseite befestigt ist. Der Kupplungsring 31 hat Gewindebohrungen 33, in die die Befestigungsschrauben 32 mit ihrem freien Ende geschraubt sind. Damit der Kupplungsring 31 bei montierter Löseeinheit 21 demontiert werden kann, sind die Befestigungsschrauben 32 von der gegenüberliegenden Seite des Gehäuses 30 aus betätigbar. In diesem Bereich hat das Gehäuse 30 Vertiefungen 34, die die Schraubenköpfe 35 aufnehmen, die am Boden der Vertiefungen 34 anliegen.

Die Kupplungsschraube 12 wird mit geringem Spiel vom Kupplungsring 31 umgeben. Die Kupplungsschraube 12 ist am freien, außerhalb der Werkzeugspindel 3 liegenden Ende mit einem radial nach außen gerichteten Flansch 36 versehen. Er liegt in der in den Fig. 4 und 5 dargestellten Grundstellung der Löseeinheit 21 mit axialem Abstand einem axial vorstehenden Bund 37 des Kupplungsringes 31 gegenüber.

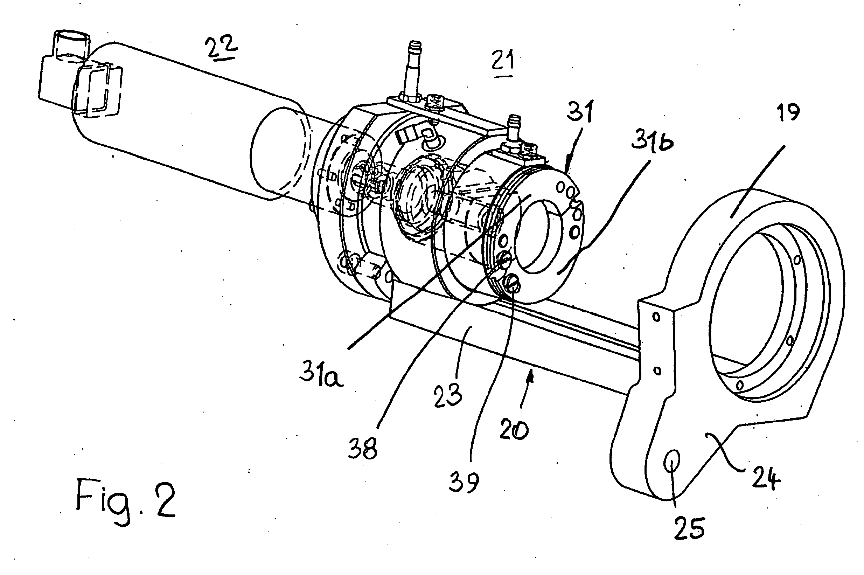

Damit der Kupplungsring 31 nach dem Lösen der Befestigungsschrauben 32 abgenommen werden kann, ist er geteilt ausgebildet und weist zwei Ringteile 31a, 31b (Fig. 2) auf, die mit jeweils einer axialen Schwenkachse 38, 39 an der Stirnseite des Gehäuses 30 schwenkbar gelagert sind. Die Schwenkachsen 38, 39 können beispielsweise durch Paßschrauben gebildet sein, die in entsprechende Öffnungen in der Stirnseite des Gehäuses 30 eingesetzt werden. Nach dem Lösen der Befestigungsschrauben 32 können die etwa halbkreisförmigen Ringteile 31a, 31b auf den Schwenkachsen 38, 39 so weit verschoben werden, daß der Bund 37 aus dem Gehäuse 30 heraustritt. Dann können die Ringteile 31a, 31b um die Schwenkachsen 38, 39 nach außen geschwenkt werden, so daß sich die Löseeinheit 21 abnehmen läßt.

Bei einer zweiten Ausführungsform sind die Ringteile 31a, 31b des Kupplungsringes 31 nicht schwenkbar vorgesehen, sondern lassen sich lediglich an das Gehäuse 30 anschrauben bzw. von ihm abschrauben. Damit die beiden Ringteile 31a, 31b als Einheit zusammengehalten werden, ist der Kupplungsring 31 in seiner Mantelfläche mit einer Ringnut 40 versehen, in die ein elastischer Ring, vorzugsweise ein O-Ring, eingelegt werden kann, der die beiden Ringteile 31a, 31b zusammenhält.

Im Gehäuse 30 der Löseeinheit 21 ist eine Ausstoßmutter 41 untergebracht, die an der Innenwand 42 des Gehäuses 30 anliegt. Die Ausstoßmutter 41 hat eine zentrale durchgehende Gewindebohrung 43, in die eine Gewindespindel 44 eingreift. Sie ist mit Axiallagern 45, 46 im Gehäuse 30 abgestützt. Die Gewindespindel 44 ist mit einer Antriebswelle 47 des Antriebs 22 gekuppelt. Je nach Drehrichtung der Gewindespindel 44 wird die Ausstoßmutter 41 in Richtung auf das Druckstück 11 oder von ihm weg axial im Gehäuse 30 verschoben.

Die Ausstoßmutter 41 hat eine radial abstehende Drehmomentenstütze 48 (Fig. 4), die mit ihrem radial äußeren Ende in einen in Achsrichtung verlaufenden Schlitz 49 des Gehäuses 30 eingreift. Die Breite dieses Schlitzes 49 entspricht der Querschnittsbreite der Drehmomentenstütze 48 im Eingriffsbereich. Die Drehmomentenstütze 48 hat einen in der Ausstoßmutter 41 befestigten und radial über sie vorstehenden Bolzen 50, der in die Ausstoßmutter 41 geschraubt oder auch eingepreßt sein kann. Auf dem Bolzen 50 sitzt eine Buchse 51, die annähernd spielfrei im Schlitz 49 des Gehäuses 30 geführt ist. Die Länge des in Axialrichtung sich erstreckenden Schlitzes 49 entspricht mindestens dem maximalen Verschiebeweg der Ausstoßmutter 41 im Gehäuse 30.

Das Gehäuse 30 der Löseeinheit 21 sitzt in einem Aufnahmeflansch 52, der an der Haltevorrichtung 20 befestigt wird. Das Gehäuse 30 ist axial gegenüber dem Aufnahmeflansch 52 begrenzt verschiebbar, wenn das in die Werkzeugspindel 3 eingespannte Werkzeug 1 gelöst werden soll. Das Gehäuse 30 ist durch wenigstens eine Feder 53, vorzugsweise eine Tellerfeder, in Richtung auf den Antrieb 22 nach rechts belastet. Die Feder 53 stützt sich am Aufnahmeflansch 52 sowie einem Sicherungsring 54 ab, der auf der Außenseite des Gehäuses 30 sitzt.

An dem von der Werkzeugspindel 3 abgewandten Ende der Löseeinheit 21 ist der Antrieb 22 befestigt. Er liegt mit einer Motorflanschplatte 55 an der Stirnseite des Gehäuses 30 an und ist mit Schrauben 56 am Gehäuse 30 befestigt. Die Flanschplatte 55 selbst ist mit Schrauben 57 an der Stirnseite eines Motorgehäuses 58 angeschraubt. Die Flanschplatte 55 weist in Höhe der Befestigungsschrauben 32 liegende axiale Durchgangsöffnungen 59 auf (Fig. 5), damit die Befestigungsschrauben 32 auch bei montierter Flanschplatte 55 von außen zugänglich sind. Die Durchgangsöffnungen 59 befinden sich in einem radial über das Motorgehäuse 58 überstehenden Bereich.

Die Gewindespindel 44 hat einen im Bereich außerhalb der Ausstoßmutter 41 liegenden Bund 60, an dem das eine Axiallager 45 axial abgestützt ist. Auf der gegenüberliegenden Seite stützt sich das Axiallager 45 an einer radial nach innen ragenden Schulterfläche 61 des Gehäuses 30 ab.

Das axial benachbarte Axiallager 46 stützt sich an einer weiteren radial nach innen ragenden Schulterfläche 62 des Gehäuses 30 sowie an einer auf die Gewindespindel 44 geschraubten Mutter 64 axial ab.

Die Löseeinheit 21 ist mit zwei Sensoren 65 und 66 versehen (Fig. 4), die radial von der Löseeinheit 21 abstehen. Der Sensor 65 ragt in Höhe des Druckstückes 11 in das Gehäuse 30 und ist durch eine Sensorplatte 67 gehalten, die durch wenigstens eine Schraube 68 auf dem Gehäuse 30 benachbart zum Kupplungsring 31 befestigt ist.

Der andere Sensor 66 sitzt in einer Sensorplatte 69, die mit wenigstens einer Schraube 70 auf dem Aufnahmeflansch 52 befestigt ist. Beide Sensoren 65, 66 sind vorteilhaft induktiv arbeitende Sensoren. Der Sensor 65 hat zwei Funktionen. Wenn das Werkzeug 1 ordnungsgemäß in die Werkzeugspindel 3 eingespannt ist, befindet sich der Flansch 13 des Druckstückes 11 in der in den Fig. 4 und 5 dargestellten Position, in der der Sensor 65 eine Schaltfläche 71 des Druckstückflansches 13 erfaßt. Die Schaltfläche 71 wird durch die Mantelfläche des Druckstückflansches 13 gebildet. Der Sensor 65 hat außerdem die Aufgabe, den Ausstoßvorgang des Werkzeuges 1 aus der Werkzeugspindel 3 zu überwachen.

Der Sensor 66 dient dazu, den Antrieb 22 dann abzuschalten, wenn sich das Gehäuse 30 in seiner Grundstellung gemäß den Fig. 4 und 5 befindet. Der Abschaltvorgang wird durch eine Schaltfläche 74 ausgelöst, die an eine außenseitige Vertiefung 75 im Gehäuse 30 in Richtung auf den Antrieb 22 anschließt.

Die Sensoren 65, 66 lassen sich vorteilhaft in Achsrichtung des Gehäuses 30 bzw. des Aufnahmeflansches 52 begrenzt einstellen, so daß eine einfache lagegenaue Positionierung der Sensoren 65, 66 relativ zu den Schaltflächen 71 und 74 gewährleistet ist.

Die Fig. 4 und 5 zeigen die Ausgangslage der Löseeinheit 21, wenn das Werkzeug 1 ordnungsgemäß in die Werkzeugspindel 3 eingespannt ist. Der Motor 22 ist abgeschaltet, so daß die Gewindespindel 44 nicht dreht. Die Ausstoßmutter 41 hat axialen Abstand vom Flansch 13 des Druckstückes 11. In dieser Grundstellung hat der Flansch 36 der Kupplungsschraube 12 axialen Abstand vom Bund 37 des Kupplungsringes 31. Die einander gegenüberliegenden Abstützflächen 76, 77 von Bund 37 und Flansch 36 berühren in dieser Stellung einander nicht. Dadurch kann die Kupplungsschraube 12, die drehfest mit der Spindelwelle 5 verbunden ist, ungehindert um ihre Achse drehen, wenn die Spindelwelle 5 dreht. Da der Kupplungsring 31 die Kupplungsschraube 12 mit geringem radialen Spiel umgibt, wird die Drehbewegung der Kupplungsschraube 12 auch nicht durch den Kupplungsring 31 behindert. Das geringe Spiel führt aber zu einer guten Abdichtung des Innenraumes der Löseeinheit 21 und verhindert damit den Zutritt von Schmutz, Staub, Spänen und dergleichen.

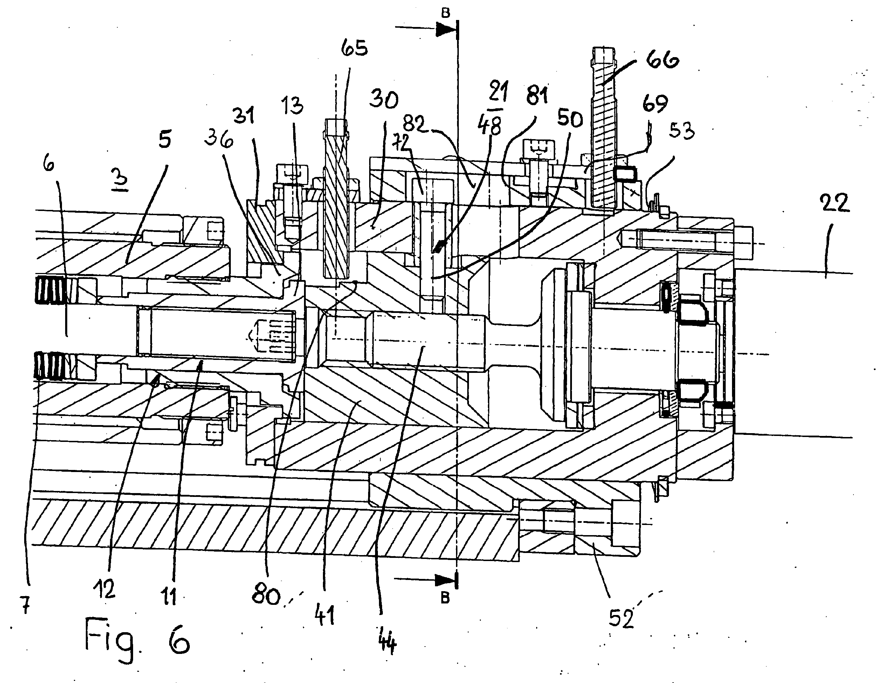

Soll das Werkzeug 1 der Werkzeugspindel 3 entnommen werden, wird zunächst der Antrieb der Spindelwelle 5 abgeschaltet, so daß sie und damit auch die Kupplungsschraube 12 und das Druckstück 11 still stehen. Anschließend wird der Motor 22 eingeschaltet, so daß die Antriebswelle 47 und die drehfest mit ihr verbundene Gewindespindel 44 drehbar angetrieben werden. Die Gewindespindel 44 wird so gedreht, daß die Ausstoßmutter 41 in Richtung auf das Druckstück 11 im Gehäuse 30 verschoben wird. Die Drehmomentenstütze 48 stellt sicher, daß die Ausstoßmutter 41 zuverlässig axial verschoben und nicht um ihre Achse gedreht wird. Sobald die Kupplungsmutter 41 mit ihrer Stirnseite am Flansch 13 des Druckstückes 11 anliegt, wird nunmehr das komplette Gehäuse 30 mit der Gewindespindel 44 und dem Antriebsmotor 22 in den Fig. 4 und 5 nach rechts bewegt, bis die radiale, durch die Stirnseite des Bundes 37 des Kupplungsringes 31 gebildete Abstützfläche 76 an der radialen Abstützfläche 77 des Flansches 36 der Kupplungsschraube 12 anliegt. In dieser Anschlußstellung der beiden Abstützflächen 76, 77 ist der Kraftfluß geschlossen. Da die Gewindespindel 44 durch den Antriebsmotor 22 weiter angetrieben wird, baut sich nunmehr die Kraft zum Zusammendrücken des Federpaketes 7 in der Werkzeugspindel 3 auf. Die Ausstoßmutter 41 wird weiter so lange in Richtung auf die Werkzeugspindel 3 verschoben, bis der Antriebsmotor 22 bei Überschreiten eines einstellbaren Maximalstromes automatisch abgeschaltet wird. Dieser maximale Strom tritt dann auf, wenn das Druckstück 11 mit seinem Flansch 13 am Boden 78 einer stirnseitigen Vertiefung 79 (Fig. 5) der Kupplungsschraube 12 zur Anlage kommt. Die Kupplungsschraube 12 bildet somit einen Anschlag für die axiale Verstellung des Druckstückes 11 und der Ausstoßmutter 41 und gewährleistet dadurch eine definierte Stellung der Spannstange 6 mit dem Konusstück 18 zum Ausstoßen und Einsetzen des Werkzeuges 1. Diese Lösestellung ist in Fig. 6 dargestellt. Das Gehäuse 30 ist relativ zum Aufnahmeflansch 52 verschoben. Das Konusstück 18 auf der Spannstange 6 gibt die Spannzangen 16 frei, so daß sie in die das Werkzeug 1 freigebende Lage verschwenkt werden können. Das Werkzeug 1 wird auf dem letzten Stück des Verfahrweges der Spannstange 6 aus der Werkzeugaufnahme 14 der Spindelwelle 5 ausgestoßen.

Bei der beschriebenen Ausbildung wird der Antriebsmotor 22 bei Überschreiten eines Maximalstromes abgeschaltet. Es ist aber auch möglich, zum Abschalten des Motors beim Lösevorgang den Sensor 65 heranzuziehen. Er gibt dann ein Abschaltsignal an den Motor 22, wenn eine an der Ausstoßmutter 41 vorgesehene Schaltfläche 80 (Fig. 6) in den Erfassungsbereich des Sensors 65 gelangt.

Nachdem das Werkzeug 1 aus der Werkzeugaufnahme 14 ausgestoßen worden ist, kann es der Werkzeugspindel 3 entnommen werden. In die Werkzeugaufnahme 14 kann anschließend ein neues Werkzeug 1 eingesetzt werden. Der Motor 20 wird dann in umgekehrter Drehrichtung geschaltet, so daß die Gewindespindel 44 so dreht, daß die Ausstoßmutter 41 zurück in die in den Fig. 4 und 5 dargestellte Lösestellung verschoben wird. Das Federpaket 7 verschiebt die Spannstange 6 und damit das Druckstück 11 in dem Maße in Richtung auf die Löseeinheit 21, wie sich die Ausstoßmutter 41 im Gehäuse 30 zurückbewegt. Auf diese Weise wird das neue Werkzeug 1 in der Werkzeugaufnahme 14 gespannt. Sobald die Drehmomentenstütze 48 mit dem Kopf 72 des Bolzens 50 an dem in Fig. 6 rechten Rand 81 eines Schlitzes 82 im Aufnahmeflansch 52 zur Anlage kommt, wird das Gehäuse 30 mit dem Kupplungsring 31 wieder in Richtung auf die Werkzeugspindel 3 verschoben. Der Kopf 72 des Bolzens 50 verhindert ein Verdrehen des Gehäuses 30 gegenüber dem Aufnahmeflansch 52, in dem der Kopf 72 mit geringem Spiel im Schlitz 82 aufgenommen ist. Schließlich wird wieder die Lage gemäß den Fig. 4 und 5 erreicht, in der die Abstützflächen 76, 77 des Kupplungsringes 31 und des Druckstückes 12 Abstand voneinander haben. Sobald die Schaltfläche 74 des Gehäuses 30 in den Meßbereich des Sensors 66 gelangt (Fig. 4), wird der Antrieb 22 abgeschaltet. Da die Abstützflächen 76, 77 frei sind, kann die Spindelwelle 5 wieder frei drehen. Bei den beschriebenen Bewegungen kommt die Schaltfläche 80 der Ausstoßmutter 41 aus dem Meßbereich des Sensors 65, während die Schaltfläche 71 des Druckstückes 12 in den Erfassungsbereich des Sensors 65 gelangt, wenn das Werkzeug 1 richtig gespannt ist. Nunmehr ist die Grundstellung gemäß den Fig. 4 und 5 erreicht. Der Sensor 65 gibt dann ein Freigabesignal zum Einschalten der Werkzeugspindel 3.

Der Sensor 66 ist im Ausführungsbeispiel ortsfest am Aufnahmeflansch 52 angeordnet. Es ist aber auch möglich, den Sensor 66 mit der Ausstoßmutter 41 mitfahrend auszubilden.

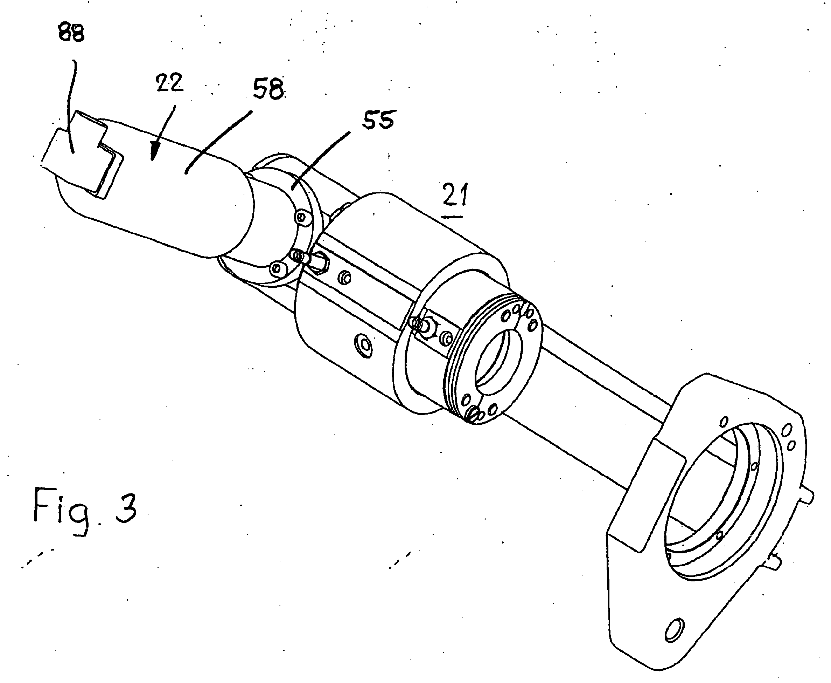

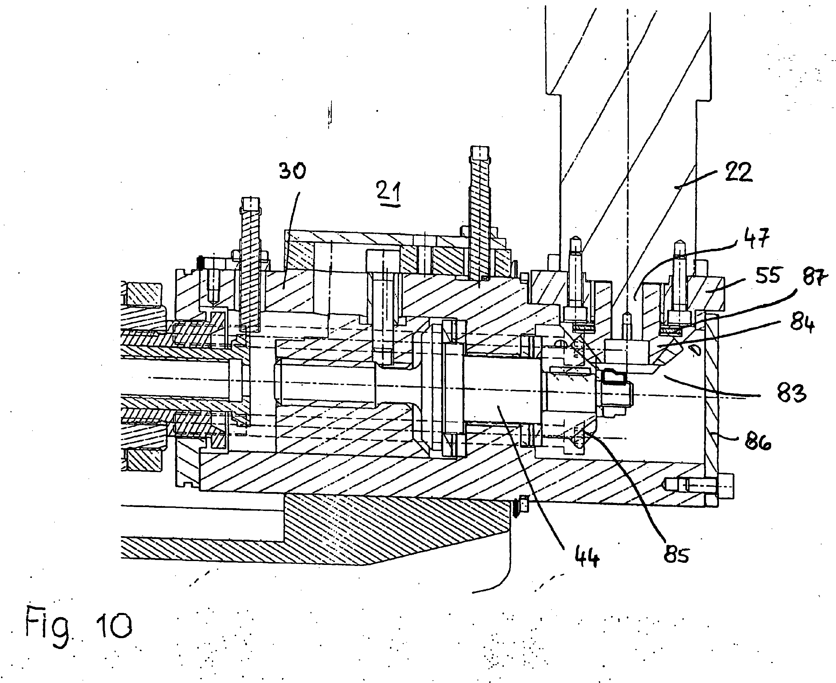

Die Fig. 3 und 10 zeigen eine Ausführungsform, die sich von dem zuvor beschriebenen Ausführungsbeispiel dadurch unterscheidet, daß der Motor 22 nicht in Längsrichtung an die Löseeinheit 21 anschließt, sondern rechtwinklig zu ihr liegt. Aus diesem Grunde ist die Motorwelle 47 (Fig. 10) über ein Kegelradgetriebe 83 mit der Gewindespindel 44 antriebsverbunden. Auf der Motorwelle 47 sitzt ein Kegelrad 84, das mit einem drehfest auf der Gewindespindel 44 sitzenden Kegelrad 85 kämmt.

Die Flanschplatte 55 ist im Unterschied zum vorigen Ausführungsbeispiel nicht an die Stirnseite des Gehäuses 30 angeflanscht, sondern an seiner Mantelfläche, die eine entsprechende Abflachung aufweist. Stirnseitig ist das Gehäuse 30 der Löseeinheit 21 durch einen Deckel 86 geschlossen. Das auf der Motorwelle 47 drehfest sitzende Kegelrad 84 ist durch ein Nadellager 87 axial abgestützt.

Wie beim vorigen Ausführungsbeispiel ist am freien Ende des Motorgehäuses 58 ein Anschlußstecker 88 vorgesehen.

Die Ausführungsform gemäß den Fig. 3 und 10 zeichnet sich durch eine kurze Baulänge aus. Sie kann beispielsweise für Vertikalspindeln bei Kehlmaschinen eingesetzt werden.

Die Löseeinheit 21 ist gleich ausgebildet wie das vorige Ausführungsbeispiel.

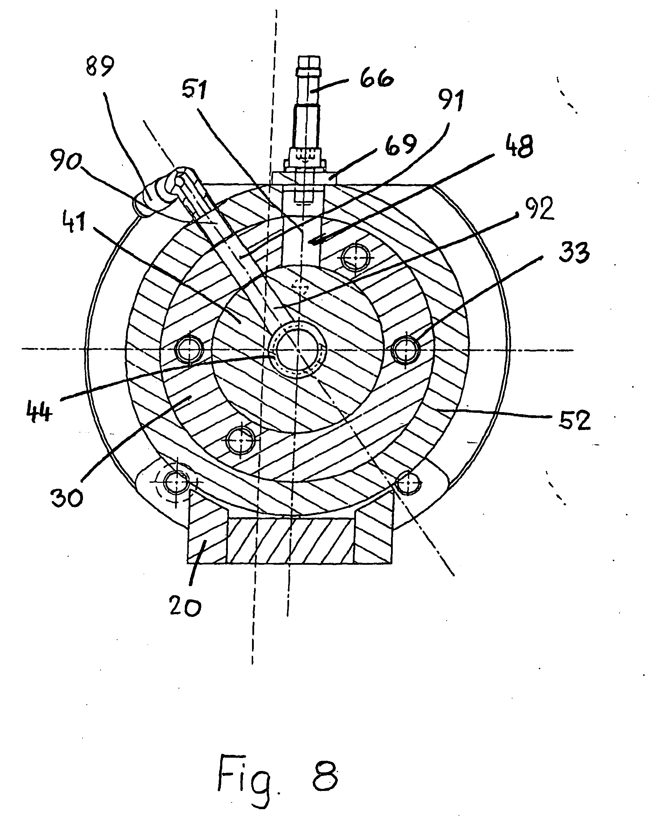

Wie die Fig. 1 und 8 zeigen, ist am Aufnahmeflansch 52 ein Schmiernippel 89 vorgesehen, an den Schmierbohrungen 90 bis 92 anschließen. Sie durchsetzen den Aufnahmeflansch 52, das Gehäuse 30 und die Ausstoßmutter 41. Auf diese Weise können die Ausstoßmutter 41 und die Gewindespindel 44 geschmiert werden.

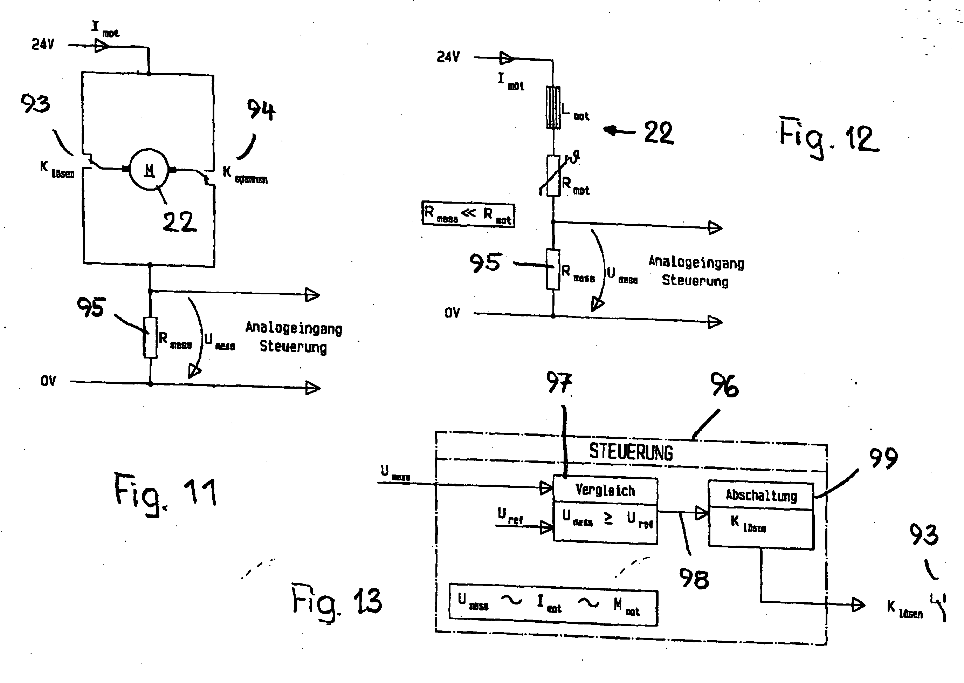

Die Fig. 11, 12 und 13 zeigen einen Teil der bevorzugten Steuerung für die Löseeinheit. Der Antrieb 22 (Fig. 11 und 12) wird mit einem Motorstrom Iₘₒₜ betrieben. Mit zwei Schaltelementen 93, 94, die im Ausführungsbeispiel Relais sind, läßt sich die Drehrichtung des Antriebes 22 und damit die Drehrichtung der Gewindespindel 44 einstellen. Der Motor besteht im Ersatzschaubild aus einer Induktivität Lₘₒₜ und einem Widerstand Rₘₒₜ, der abhängig von der Motortemperatur veränderlich ist. In Reihe zum Motor ist ein Meßwiderstand Rₘₑₛₛ 95 geschaltet. Dieser ist wesentlich kleiner dimensioniert als der Motorwiderstand Rₘₒₜ, wodurch der Motor in seiner Leistung nicht wesentlich beeinträchtigt wird.

An dem Meßwiderstand Rₘₑₛₛ 95 fällt in Abhängigkeit des Motorstromes Iₘₒₜ eine Spannung Uₘₑₛₛ ab, welche einer Steuerung 96 zugeführt wird. Sie enthält einen Vergleicher 97, in dem die Spannung Uₘₑₛₛ mit einer Referenzspannung U_{ref} verglichen wird. Sobald die Spannung Uₘₑₛₛ ≥ der Referenzspannung U_{ref} ist, liefert der Vergleicher 97 ein Signal 98 an ein Abschaltmodul 99. Es erzeugt ein Abschaltsignal, mit dem das Schaltelement 93 betätigt wird und den Motor abschaltet.

Die Spannung Uₘₑₛₛ ist proportional dem Motorstrom Iₘₒₜ, der seinerseits proportional dem Motormoment Mₘₒₜ ist. Über die Referenzspannung U_{ref} kann die maximal mögliche Spannung Uₘₑₛₛ eingestellt werden und damit der Abschaltstrom des Motors. Dadurch ist gewährleistet, daß der Motor nur bis zu seinem zulässigen Motorstrom und Motormoment belastet wird.

Da der Meßwiderstand Rₘₑₛₛ 95 wesentlich kleiner ist als der Motorwiderstand Rₘₒₜ, ist damit der Antrieb 22 außerdem vor Überlastung geschützt.

## Patentansprüche

1. Vorrichtung mit einer Löseeinheit (21) zum Betätigen einer Spannvorrichtung für Werkzeuge, mit mindestens einem Löseelement (41), das durch einen Antrieb (22) aus einer Ruhestellung in eine Lösestellung verstellbar ist, in der es eine Spannstange (6) der Spannvorrichtung gegen eine Spannkraft in eine Freigabestellung verschiebt,
**dadurch gekennzeichnet,**
**dass** der Antrieb (22) ein Elektromotor ist, dass das Löseelement (41) axial verschiebbar ist, dass die Löseeinheit (21) wenigstens ein Kupplungselement (31) aufweist, das mit einem Gegenkupplungselement (12) einer Werkzeugspindel (3) zusammenwirkt, dass durch das Gegenkupplungselement (12) ein mit der Spannstange (6) fest verbundenes Druckstück (11) regt, das im Verschiebeweg des Löseelementes (41) liegt, und dass Abstützyflächen (76, 77) des Kupplungselementes (31) und des Gegenkupplungselementes (12) in der Spannstellung axialen Abstand voneinander haben, in der Lösestellung aber aneinander liegen und die Spannstange (6) gegen Federkraft in der Freigabestellung halten.

2. Vorrichtung nach Anspruch 1,
**dadurch gekennzeichnet, dass** die Achse des Motors (22) zumindest parallel, vorzugsweise fluchtend zur Achse der Löseeinheit (21) liegt.

3. Vorrichtung nach Anspruch 1,
**dadurch gekennzeichnet, dass** die Achse des Motors (22) winklig, vorzugsweise rechtwinklig zur Achse der Löseeinheit (21) liegt.

4. Vorrichtung nach Anspruch 1 oder 3,
**dadurch gekennzeichnet, dass** die Motorwelle (47) über ein Kegelgetriebe (84, 85) mit einer Antriebsspindel (44) der Löseeinheit (21) antriebsverbunden ist.

5. Vorrichtung nach Anspruch 1 oder 2,
**dadurch gekennzeichnet, dass** die Spannvorrichtung (6, 16), die Löseeinheit (21) und der Motor (22) axial hintereinander angeordnet sind.

6. Vorrichtung nach Anspruch 4 oder 5,
**dadurch gekennzeichnet, dass** das Löseelement (41) auf der Antriebsspindel (44) sitzt.

7. Vorrichtung nach einem der Ansprüche 4 bis 6,
**dadurch gekennzeichnet, dass** die Antriebsspindel (44) axial fest in einem Gehäuse (30) der Löseeinheit (21) angeordnet ist.

8. Vorrichtung nach einem der Ansprüche 4 bis 7,
**dadurch gekennzeichnet, dass** die Antriebsspindel (44) eine Gewindespindel ist, und dass vorteilhaft das Löseelement (41) in Gewindeeingriff auf der Antriebsspindel (44) sitzt.

9. Vorrichtung nach einem der Ansprüche 1 bis 8,
**dadurch gekennzeichnet, dass** das Löseelement (41) gegenüber dem Gehäuse (30) der Löseeinheit (21) gegen Verdrehen gesichert ist.

10. Vorrichtung nach einem der Ansprüche 1 bis 9,
**dadurch gekennzeichnet, dass** das Löseelement (41) mit mindestens einer Drehmomentenstütze (48) versehen ist, die vorteilhaft als ein radial vom Löseelement (41) abstehender Arm ausgebildet ist.

11. Vorrichtung nach Anspruch 10,
**dadurch gekennzeichnet, dass** das freie Ende der Drehmomentenstütze (48) in einem Schlitz (49) des Gehäuses (30) der Löseeinheit (21) axial geführt ist.

12. Vorrichtung nach einem der Ansprüche 1 bis 11,
**dadurch gekennzeichnet, dass** das Gehäuse (30) der Löseeinheit (21) in einer Aufnahme (52) aufgenommen ist, gegenüber der das Gehäuse (30) begrenzt axial verschiebbar ist.

13. Vorrichtung nach einem der Ansprüche 1 bis 12,
**dadurch gekennzeichnet, dass** das Kupplungselement (31) lösbar am Gehäuse (30) der Löseeinheit (21) vorgesehen ist.

14. Vorrichtung nach einem der Ansprüche 1 bis 13,
**dadurch gekennzeichnet, dass** das Kupplungselement (31) ein Kupplungsring ist und ein Gegenkupplungselement (12) der Werkzeugspindel (3) übergreift.

15. Vorrichtung nach einem der Ansprüche 1 bis 14, **dadurch gekennzeichnet, dass** das Kupplungselement (31) ein geteilter Kupplungsring ist.

16. Vorrichtung nach Anspruch 15,
**dadurch gekennzeichnet, dass** die beiden Kupplungsringteile (31a, 31 b) um jeweils eine Achse (38, 39) schwenkbar am Gehäuse (30) der Löseeinheit (21) gelagert sind.

17. Vorrichtung nach einem der Ansprüche 1 bis 16,
**dadurch gekennzeichnet, dass** das Gegenkupplungselement (12) eine in eine Spindelwelle (5) der Werkzeugspindel (3) geschraubte Kupp-lungsschraube ist.

18. Vorrichtung nach einem der Ansprüche 1 bis 17,
**dadurch gekennzeichnet, dass** beim Auftreffen des Löseelementes (41) auf das Druckstück (11) das Gehäuse (30) mit Antriebsspindel (44) so weit axial verschiebbar ist, bis die Abstützflächen (76, 77) des Kupplungselementes (31) und des Gegenkupplungselementes (12) aneinander liegen.

19. Vorrichtung nach Anspruch 17 oder 18,
**dadurch gekennzeichnet, dass** nach der Anlage der Abstützflächen (76, 77) aneinander die Spannstange (6) zur Freigabe des Werkzeuges (1) durch das Löseelement (41) verschiebbar ist.

20. Vorrichtung nach einem der Ansprüche 1 bis 19,
**dadurch gekennzeichnet, dass** an einem Meßwiderstand (95) in Abhängigkeit des Motorstromes (Iₘₒₜ) eine Spannung (Uₘₑₛₛ) abfällt, die mit einer Referenzspannung (U_{ref}) in einer Steuerung (96) verglichen wird, die in Abhängigkeit vom Vergleich ein Abschaltsignal (98) für den Motor (22) erzeugt.

21. Vorrichtung nach Anspruch 20,
**dadurch gekennzeichnet, dass** die Spannung (Uₘₑₛₛ) proportional dem Motorstrom (Iₘₒₜ) ist.

22. Vorrichtung nach Anspruch 20 oder 21,
**dadurch gekennzeichnet, dass** der Motorstrom (Iₘₒₜ) proportional dem Motormoment (Mₘₒₜ) ist, und dass vorteilhaft der Motor (22) bei Überschreiten der Referenzspannung (U_{ref}) abgeschaltet wird.

## Claims

1. An apparatus with a releasing unit (21) for actuating a clamping apparatus for tools, with at least one releasing element (41) which is displaceable by a drive (22) out of a rest position into a release position in which it displaces a clamping rod (6) of the clamping apparatus against a clamping force into a freed position, **characterized in that** the drive (22) is an electric motor, the releasing element (41) is displaceable in an axial manner, the releasing unit (21) has at least one coupling element (31) which cooperates with a matching coupling element (12) of a tool spindle (3), a thrust member (11) which is connected to the clamping rod (6) in a fixed manner and which is situated in the displacement path of the releasing element (41) projects through the matching coupling element (12), and support faces (76, 77) of the coupling element (31) and the matching coupling element (12) are at an axial distance from each other in the clamping position, but rest against each other in the release position and hold the clamping rod (6) against spring force in the freed position.

2. An apparatus according to Claim 1, **characterized in that** the axis of the motor (22) is situated at least parallel to, and preferably in alignment with, the axis of the releasing unit (21).

3. An apparatus according to Claim 1, **characterized in that** the axis of the motor (22) is situated at an angle, and preferably at a right angle, to the axis of the releasing unit (21).

4. An apparatus according to Claim 1 or 3, **characterized in that** the motor shaft (47) is connected in a driving manner to a drive spindle (44) of the releasing unit (21) by way of a bevel gearing (84, 85).

5. An apparatus according to Claim 1 or 2, **characterized in that** the clamping apparatus (6, 16), the releasing unit (21) and the motor (22) are arranged axially one behind the other.

6. An apparatus according to Claim 4 or 5, **characterized in that** the releasing element (41) is mounted on the drive spindle (44).

7. An apparatus according to any one of Claims 4 to 6, **characterized in that** the drive spindle (44) is arranged in a housing (30) of the releasing unit (21) in an axially fixed manner.

8. An apparatus according to any one of Claims 4 to 7, **characterized in that** the drive spindle (44) is a threaded spindle, and the releasing element (41) is advantageously mounted on the drive spindle (44) with thread engagement.

9. An apparatus according to any one of Claims 1 to 8, **characterized in that** the releasing element (41) is prevented from turning with respect to the housing (30) of the releasing unit (21).

10. An apparatus according to any one of Claims 1 to 9, **characterized in that** the releasing element (41) is provided with at least one torque reaction bar (48), which is advantageously designed in the form of an arm projecting in a radial manner from the releasing element (41).

11. An apparatus according to Claim 10, **characterized in that** the free end of the torque reaction bar (48) is guided in an axial manner in a slot (49) in the housing (30) of the releasing unit (21).

12. An apparatus according to any one of Claims 1 to 11, **characterized in that** the housing (30) of the releasing unit (21) is received in a receiving means (52), with respect to which the housing (30) is displaceable in an axial manner to a limited degree.

13. An apparatus according to any one of Claims 1 to 12, **characterized in that** the coupling element (31) is provided in a releasable manner on the housing (30) of the releasing unit (21).

14. An apparatus according to any one of Claims 1 to 13, **characterized in that** the coupling element (31) is a coupling ring and engages over a matching coupling element (12) of the tool spindle (3).

15. An apparatus according to any one of Claims 1 to 14, **characterized in that** the coupling element (31) is a divided coupling ring.

16. An apparatus according to Claim 15, **characterized in that** the two parts (31 a, 31 b) of the coupling ring are mounted on the housing (30) of the releasing unit (21) so as to be pivotable about an axis (38, 39) in each case.

17. An apparatus according to any one of Claims 1 to 16, **characterized in that** the matching coupling element (12) is a coupling bolt screwed into a spindle shaft (5) of the tool spindle (3).

18. An apparatus according to any one of Claims 1 to 17, **characterized in that** when the releasing element (41) encounters the thrust member (11) the housing (30) is displaceable by the drive spindle (44) in an axial manner until the support faces (76, 77) of the coupling element (31) and of the matching coupling element (12) abut against each other.

19. An apparatus according to Claim 17 or 18, **characterized in that** after the abutment of the support faces (76, 77) against each other the clamping rod (6) is displaceable in order to free the tool (1) by the releasing element (41).

20. An apparatus according to any one of Claims 1 to 19, **characterized in that** a voltage **(Uₘₑₛₛ)** occurs at a measurement resistor (95) in a manner dependent upon the motor current **(Iₘₒₜ),** the voltage **(Uₘₑₛₛ)** being compared with a reference voltage **(U_{ref})** in a control device (96) which produces a switch-off signal (98) for the motor (22) in a manner dependent upon the comparison.

21. An apparatus according to Claim 20, **characterized in that** the voltage **(Uₘₑₛₛ)** is proportional to the motor current **(Iₘₒₜ).**

22. An apparatus according to Claim 20 or 21, **characterized in that** the motor current **(Iₘₒₜ)** is proportional to the motor moment **(Mₘₒₜ),** and the motor (22) is advantageously switched off if the reference voltage **(U_{ref})** is exceeded.

## Revendications

1. Dispositif avec une unité de déblocage (21) pour actionner un dispositif de serrage pour outils, comprenant au moins un élément de déblocage (41) qui peut être déplacé par un moyen d'entraînement (22), d'une position de repos dans une position de déblocage dans laquelle il fait coulisser, vers une position de dégagement, une tige de serrage (6) du dispositif de serrage, à l'encontre d'une force de serrage,
**caractérisé en ce que** le moyen d'entraînement (22) est un moteur électrique, **en ce que** l'élément de déblocage (41) peut coulisser axialement, **en ce que** l'unité de déblocage (21) présente au moins un élément d'accouplement (31) qui coopère avec un élément d'accouplement conjugué (12) d'une broche d'outil (3), **en ce qu'**au travers de l'élément d'accouplement conjugué (12) fait saillie une pièce de poussée (11) reliée de manière fixe à la tige de serrage (6) et se situant dans le parcours de coulissement de l'élément de déblocage (41), et **en ce que** des surfaces d'appui (76, 77) de l'élément d'accouplement (31) et de l'élément d'accouplement conjugué (12) présentent un espacement axial l'une de l'autre dans la position de serrage, mais s'appliquent l'une contre l'autre dans la position de déblocage et maintiennent la tige de serrage (6) dans la position de dégagement, à l'encontre d'une force de ressort.

2. Dispositif selon la revendication 1,
**caractérisé en ce que** l'axe du moteur (22) est agencé au moins de manière parallèle à l'axe de l'unité de déblocage (21), et de préférence de manière à être aligné avec celui-ci.

3. Dispositif selon la revendication 1,
**caractérisé en ce que** l'axe du moteur (22) est agencé de manière à former un angle, de préférence un angle droit avec l'axe de l'unité de déblocage (21).

4. Dispositif selon la revendication 1 ou la revendication 3,
**caractérisé en ce que** l'arbre de moteur (47) est relié, sur le plan de la transmission d'entraînement, à une broche d'entraînement (44) de l'unité de déblocage (21) par l'intermédiaire d'un système d'engrenages coniques (84, 85).

5. Dispositif selon la revendication 1 ou la revendication 2,
**caractérisé en ce que** le dispositif de serrage (6, 16), l'unité de déblocage (21) et le moteur (22) sont agencés axialement les uns à la suite des autres.

6. Dispositif selon la revendication 4 ou la revendication 5,
**caractérisé en ce que** l'élément de déblocage (41) est placé sur la broche d'entraînement (44).

7. Dispositif selon l'une des revendications 4 à 6,
**caractérisé en ce que** la broche d'entraînement (44) est agencée axialement fixe dans un carter (30) de l'unité de déblocage (21).

8. Dispositif selon l'une des revendications 4 à 7,
**caractérisé en ce que** la broche d'entraînement (44) est une broche filetée, et **en ce que** l'élément de déblocage (41) est avantageusement placé en prise filetée sur la broche d'entraînement (44).

9. Dispositif selon l'une des revendications 1 à 8,
**caractérisé en ce que** l'élément de déblocage (41) est arrêté en rotation par rapport au carter (30) de l'unité de déblocage (21).

10. Dispositif selon l'une des revendications 1 à 9,
**caractérisé en ce que** l'élément de déblocage (41) est pourvu d'au moins un appui de reprise de couple (48), qui est avantageusement réalisé en tant que bras en saillie radiale de l'élément de déblocage (41).

11. Dispositif selon la revendication 10,
**caractérisé en ce que** l'extrémité libre de l'appui de reprise de couple (48) est guidée axialement dans une fente (49) du carter (30) de l'unité de déblocage (21).

12. Dispositif selon l'une des revendications 1 à 11,
**caractérisé en ce que** le carter (30) de l'unité de déblocage (21) est reçu dans un logement de réception (52) par rapport auquel le carter (30) peut coulisser axialement de manière limitée.

13. Dispositif selon l'une des revendications 1 à 12,
**caractérisé en ce que** l'élément d'accouplement (31) est prévu de manière amovible sur le carter (30) de l'unité de déblocage (21).

14. Dispositif selon l'une des revendications 1 à 13,
**caractérisé en ce que** l'élément d'accouplement (31) surmonte un anneau d'accouplement et un élément d'accouplement conjugué (12) de la broche d'outil (3).

15. Dispositif selon l'une des revendications 1 à 14,
**caractérisé en ce que** l'élément d'accouplement (31) est un anneau d'accouplement divisé.

16. Dispositif selon la revendication 15,
**caractérisé en ce que** les deux parties d'anneau d'accouplement (31a, 31b) sont montées sur le carter (30) de l'unité de déblocage (21), de manière à pouvoir pivoter respectivement autour d'un axe (38, 39).

17. Dispositif selon l'une des revendications 1 à 16,
**caractérisé en ce que** l'élément d'accouplement conjugué (12) est une vis d'accouplement vissée dans un arbre de broche (5) de la broche d'outil (3).

18. Dispositif selon l'une des revendications 1 à 17,
**caractérisé en ce qu'**à partir de l'impact de l'élément de déblocage (41) sur la pièce de poussée (11), le carter (30) peut, avec la broche d'entraînement (44), être déplacé axialement jusqu'à ce que les surfaces d'appui (76, 77) de l'élément d'accouplement (31) et de l'élément d'accouplement conjugué (12) viennent s'appuyer l'une contre l'autre.

19. Dispositif selon la revendication 17 ou la revendication 18,
**caractérisé en ce qu'**après l'appui réciproque des surfaces d'appui (76, 77) l'une contre l'autre, la tige de serrage (6) peut être déplacée en coulissement par l'élément de déblocage (41) pour le dégagement de l'outil (1).

20. Dispositif selon l'une des revendications 1 à 19,
**caractérisé en ce qu'**au niveau d'une résistance de mesure (95), une tension (Uₘₑₛₛ) chute en fonction du courant du moteur (Iₘₒₜ) et est comparée à une tension de référence (U_{ref}) dans une commande (96), qui, en fonction du résultat de la comparaison, produit un signal d'arrêt (98) pour le moteur (22).

21. Dispositif selon la revendication 20,
**caractérisé en ce que** la tension (Uₘₑₛₛ) est proportionnelle au courant du moteur (Iₘₒₜ).

22. Dispositif selon la revendication 20 ou la revendication 21,
**caractérisé en ce que** le courant du moteur (Iₘₒₜ) est proportionnel au couple du moteur (Mₘₒₜ), et **en ce que** le moteur est avantageusement arrêté lors du dépassement de la tension de référence (U_{ref}).
